Europäisches Patentamt

European Patent Office     (11) Publication number: **0 324 662**

Office européen des brevets     **A2**

## (12) EUROPEAN PATENT APPLICATION

(21) Application number: **89400006.6**     (51) Int. Cl.⁴: **G 06 F 15/16**

(22) Date of filing: **03.01.89**

(30) Priority: **15.01.88 US 144201**

(43) Date of publication of application:
**19.07.89 Bulletin 89/29**

(84) Designated Contracting States:
**BE DE ES FR GB IT NL SE**

(71) Applicant: **EVANS & SUTHERLAND COMPUTER
CORPORATION
580 Arapeen Drive
Salt Lake City Utah 84108 (US)**

(72) Inventor: **Dulong, Carole
1420 Highland View Court
Los Altos California 94022 (US)**

**Scaglia, Patrick
18983 Harleigh Drive
Saratoga California 95070 (US)**

**Leclerc, Jean-Yves
1420 Highland View Court
Los Altos California 94022 (US)**

(74) Representative: **Bourgognon, Jean-Marie
Cabinet Flechner 22, Avenue de Friedland
F-75008 Paris (FR)**

(54) **Crossbar system for controlled data transfer.**

(57) A data transfer system intercouples a plurality of data sources to a plurality of data destinations for individual time-sequence communication transfers. During each transfer interval, a crossbar system transfers coded signal data from select sources to select destinations in accordance with addressing and individual distinct balancing priorities of the destinations, the priorities being offset in an equitable compensating arrangement as between individual destinations. Equitable data transfer is attained between sources and destinations by fixed prejudicial priority schedules with balancing between individual destinations in the crossbar. Priority schedules are inverted in the event of a data jam. Priority is also accommodated for an integral batch of data words in transfer.

FIG. 1

EP 0 324 662 A2

**Description**

## CROSSBAR SYSTEM FOR CONTROLLED DATA TRANSFER

The present invention relates to data transfer systems as for use in high speed computers.

The speed of a computer usually is a significant design consideration as related to the volume of work the computer can perform in a given period of time. With respect to high speed computers generally, volume of work and computation costs are paramount design objectives.

In the creation of a high speed computer, each component must be designed with a concern for speed. That is, essentially a computer can only operate as fast as its slowest component. In that regard, the data transfer system or crossbar of a computer may determine the operating speed. Consequently, a significant need exists for an effective data transfer system which is fast as well as being susceptible to implementation in an economical structure.

One of the techniques for achieving increased speed in computers involves concurrent operations. Such techniques are discussed in a book entitled, "Supercomputers Class VI Systems, Hardware and Software", S. Fernbach, North Holland, 1986. Concurrent execution of instructions involves multiple independent data paths and therefore raises a need for selective data transfers. For example, an apparatus is needed for interfacing a plurality of sources with a plurality of destinations to control individual communication. For example, it may be desirable to selectively transfer data from any one of ten data sources to any one of ten data destinations. Normally, the priorities of such transfers should be at least somewhat equitable. For example, if three sources have data for a single destination, it becomes important to equitably prioritize the transfers, subject to urgencies and jamming.

An analogy of communication between human sources and destinations illustrates the problem. Suppose ten teachers are to instruct ten pupils with individual messages or units of data. At some times, several teachers may wish to instruct one pupil. At other times, none of the teachers have a message for one of the pupils. In an equitable arrangement, the ten teachers would be accorded fair access to each of the ten pupils.

Relating the human analogy to a computer, a need exists for an economical and equitable data transfer system to interface a plurality of signal data sources to a plurality of signal data destinations.

In the past, equitable data transfer has been accomplished in computers by so-called "round-robin" systems. Such systems establish a sequence for the destinations then alter the priority for each destination after each cycle of operation. For example, considering only two data sources during one operating cycle a destination would favor one source over the other. During the next cycle the favoritism would be reversed. More realistically, assume a transfer system interfacing ten data destinations to ten data sources. Round-robin operation would involve a sequence of ten steps altering the priority schedule for each destination after each cycle of operation. In a system with ten destinations cycling through ten priority schedules, one thousand logic minterms would be required on a chip state machine, demanding a very substantial structure. Accordingly, a need exists for an improved transfer system for equitably interfacing a plurality of sources and destinations and capable of being embodied in an economical structure of practical design.

As indicated above, while equitable operation is important in data transfer structures, under certain circumstances the need exists to deviate from equitable schedules. For example, in the case of data jamming or priority data, a need exists for a system capable of deviating from equitable priority schedules to accommodate extraordinary conditions.

In general, the present invention is a data-transfer system (crossbar) for interfacing a plurality of data sources with a plurality of data destinations and scheduling transfers in accordance with an equitable schedule to pipeline data. The system might be considered to involve a pseudo round-robin operation wherein the priority schedule for each destination is set or static and prejudicial; however, as between all of the destinations the composite schedule becomes equitable. As suggested above, the equitable schedules are subject to variation under extraordinary circumstances as data jamming or to accommodate priority data.

In the drawings, which constitute a part of the specification, an exemplary embodiment of the invention is set forth as follows:

FIGURE 1 is a block diagram of a crossbar data transfer system in accordance with the present invention;

FIGURE 2 is a block diagram of a component of the system of FIGURE 1; and

FIGURE 3 is a block diagram of another component of the system of FIGURE 1.

A detailed illustrative embodiment of the present invention is disclosed herein. However, data formats, control operations and operating sequences collectively structured in accordance with the present invention may be embodied in a wide variety of forms, some of which may be quite different from those disclosed herein. Consequently, the specific structural and functional details disclosed herein are merely representative. Yet in that regard, they are deemed to afford the best embodiment for the purposes of disclosure and to afford a basis for the claims herein which define the scope of the present invention.

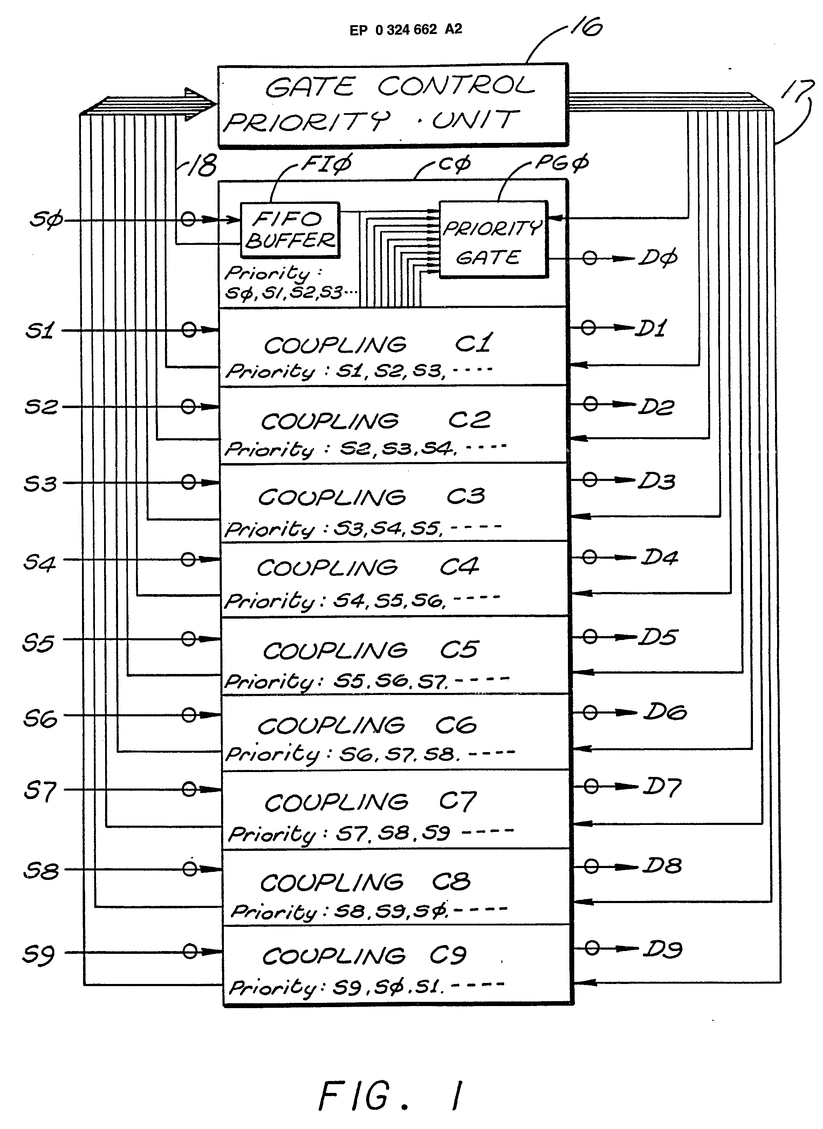

Referring initially to FIGURE 1, the system of the present invention is illustrated as a crossbar component or element for use in a computer functioning to transfer data from any of a plurality of sources to any of a plurality of destinations. In the disclosed embodiment, the sources and destinations are disclosed only as parallel data paths for digital words. Specifically, source input lines S0 through S9 are illustrated for selectively supplying data words, from any of a variety of computer structures, to individual destination lines D0 through D9. The

2

destination lines also may be connected to any of a variety of computer structures.

Somewhat in accordance with the human analogy set out above involving pupils and teachers, the system of FIGURE 1 performs an equitable interface for data transfers from the sources S0 through S9 to the destination lines D0 through D9. That is, the ten data source lines S0 through S9 are equitably afforded access to the ten destination lines D0 through D9.

The ten data source lines S0 through S9 are connected through gating structures or couplings C0 through C9 which collectively constitute the crossbar. Note that each of the couplings C0 through C9 may transfer data from any one of the data source lines S0 through S9 to any one of the destination lines D0 through D9. Furthermore, for the crossbar, the schedule of transfers is equitable.

As the couplings C0 through C9 are similar, only the coupling C0 is shown in any detail in FIGURE 1. As another convention, in describing the present embodiment, there are frequent instances of multiple elements in a set, e.g. source lines S0 through S9. for convenience and simplicity herein, references to the set often simply use the generic identifying letter, e.g. lines S. Note that sets of ten elements are formed of a letter-number reference designation using the numbers 0 through 9.

The parallel data lines S0 are connected to a FIFO buffer structure FI0 for storing data words pending transfer to a select one of the destination lines D. The output from the FIFO buffer FI0 is coupled to a priority gate PG0 (in the coupling C0) and also to similar priority gates PG in each of the other couplings C. That is, the priority gate PG0 receives ten lines 14, one being from each of the FIFO buffers FI. A similar connection exists in each of the other couplings C.

The priority gate PG0 is controlled by a gate control priority unit 16 to selectively supply signals from one of the FIFO buffers FI to the designation line D0. The operation of the gate control priority circuit 16 to implement priority schedules is treated in greater detail below. However, control signals are supplied from the unit 16 through lines 17 to control the gates PG. In that regard, the unit 16 utilizes signals supplied from the FIFO buffers FI through lines 18 to accomplish an equitable schedule of priority for the couplings C with modification under extraordinary circumstances.

Recapitulating, the gate control priority unit 16 controls the couplings C for the selective passage of data from individual source lines S to individual destination lines D in accordance with designation requests (addresses) and the logic of individual distinct balancing priority schedules for each of the destinations D. That is, each data word received in the couplings C includes a designation field to address or specify a desired destination. Established priority schedules for accommodating the specified transfers are normally controlling as implemented by the unit 16. However, the schedules are modified in accordance with signals, also provided through the lines 18, to indicate extraordinary circumstances.

It is to be noted that the distinct balancing priority schedules for the individual destination lines D offer equity of access to the lines S, not by the individual couplings C0 through C9 alone, but rather on the basis of the total system. Pursuing the equity of data transfers, during each operating cycle, e.g. clock interval, data from any one of the source lines S may be transferred to a specific one of the destination lines D. During ordinary operation, the specific source line S given access to a destination line D is determined in accordance with priority schedules that differ in each coupling C to attain the balancing equity for the total crossbar. A specific example with respect to the coupling C0 will illustrate.

As described in greater detail below, data in the form of data individual words DA is received through the source line S0 for storage in the FIFO buffer FI0. Consequently, a stack of data words may accumulate in the FIFO buffer FI0, each word containing a designation or address indicating one of the lines D. For example, the stack of words in the buffer FI0 might comprise four data words for independent transfer, respectively, to the data lines D0, D1, D4 and D8. Each of the words will be transferred during a discrete time interval in accordance with the priority schedule, or under modified schedules of extraordinary conditions.

Considering the priority schedule, it is useful to treat the situation with the perspective of the destination line D0 as accessed by the priority gate PG0. If the next data word DA in only one of the couplings C specifies the destination line D0, there is no particular problem with respect to the destination line D0. That is, in the assumed example, the next word from the buffer FI0 is addressed for the destination line D0 and if that word is the only word in the crossbar which is so addressed, no conflict exists and the word is simply transferred through the priority gate PG0 to the destination line D0.

To pursue a complicating consideration, assume that more than one of the couplings C registers a word that is posed for transfer and is designated for the destination line D0. In that situation, a conflict exists which is resolved in accordance with the priority schedule as will now be considered.

Each of the couplings C has an individual, distinct priority schedule which is equitably balanced in the composite crossbar. Specifically, the priority gate PG0 is controlled to accord priority access to sources S for the destination line D0 in the following order: S0, S1, S2, S3, S4, S5, S6, S7, S8 and S9. Except under extraordinary conditions, that priority schedule is fixed. Note that the individual priority schedule for the destination line D0 is inequitable. In the extreme, it favors the source S0 and prejudices the source S9. However, in accordance herewith, the inequity of the other individual priority schedules in the cross bar are compensating to attain equity. The logic for implementing the priority schedules in the gates PG is embodied in the unit 16.

The priority schedules for each of the couplings C are indicated in FIGURE 1 by the order of the sources S and may be seen to be offset or balanced to attain the desired equity. Specifically, the priorities for the individual couplings C are as follows::

| Coupling | Priority Schedule In Order of Priority | | | | | | | | | |
|---|---|---|---|---|---|---|---|---|---|---|
| C∅ | S∅, | S1, | S2, | S3, | S4, | S5, | S6, | S7, | S8, | S9 |
| C1 | S1, | S2, | S3, | S4, | S5, | S6, | S7, | S8, | S9, | S∅ |
| C2 | S2, | S3, | S4, | S5, | S6, | S7, | S8, | S9, | S∅, | S1 |
| C3 | S3, | S4, | S5, | S6, | S7, | S8, | S9, | S∅, | S1, | S2 |
| C4 | S4, | S5, | S6, | S7, | S8, | S9, | S∅, | S1, | S2, | S3 |
| C5 | S5, | S6, | S7, | S8, | S9, | S∅, | S1, | S2, | S3, | S4 |
| C6 | S6, | S7, | S8, | S9, | S∅, | S1, | S2, | S3, | S4, | S5 |
| C7 | S7, | S8, | S9, | S∅, | S1, | S2, | S3, | S4, | S5, | S6 |
| C8 | S8, | S9, | S∅, | S1, | S2, | S3, | S4, | S5, | S6, | S7 |
| C9 | S9, | S∅, | S1, | S2, | S3, | S4, | S5, | S6, | S7, | S8 |

From the above chart, it will be apparent that each of the couplings C is prejudicial, that is, each coupling is inequitable with respect to accepting data from the source lines S. However, it also will be apparent that the inequities of the individual couplings C are balancing for the crossbar as a whole. Thus, equity exists with respect to all of the input lines S. Some examples may be helpful.

During the basic operation, as considered above, data transfers from the source line S∅ are always favored by the destination line D∅. Somewhat similarly, transfers to the destination line D1 favor the source line S1. Similar situations exist with respect to each of the other destination lines D in that each destination line D accords priority to one of the source lines S. Further, as indicated by the above chart, each of the source lines S has second-level priority with one of the destination lines D. Similarly, each of the source lines S has third-level priority with each of the destination lines D. So, the priority schedules continue with the consequence of balancing priorities to an equitable situation. Each source line S has a balancing position with reference to all the destination lines D.

To further consider the operation of the system as illustrated in FIGURE 1, assume for example, that a condition of conflict exists. Specifically, assume that data words DA from each of the source lines S∅, S4, S5 and S7 are poised for movement to the destination line D∅. In accordance with the schedule for the destination line D∅, the next four timing cycles will provide the data words DA respectively in order from the source lines S∅, S4, S5 and S7.

To consider the equity of the system, assume the same situation as above modified by the fact that the destination line D5 is to receive the words. In that circumstance, the order of passage for words DA during four timing intervals would be from the lines: S5, S7, S∅ and S4. If the destination line D7 were the objective of the transfers, the order would be: S7, S∅, S4 and S5. Any of a multitude of similar examples will reveal the balancing equity. Thus, crossbar structure functions as a classic pipeline, equitably transferring data in accordance with desired routing.

As indicated above, the logic implementing the basic priority schedules varies the schedules under certain extraordinary circumstances. Specifically, in accordance with the disclosed embodiment, the extraordinary conditions include: (1) a FIFO buffer FI becomes jammed or (2) a series of data words to be transferred are to be kept integral, that is not separated or interrupted.

Consider first the extraordinary situation in which one (or more) of the FIFO buffers FI in the couplings C becomes jammed. The situation occurs when a FIFO buffer FI is filled to capacity. The filled buffer FI indicates a data jam in the associated source lines by a jam signal J supplied through the lines 18 to the unit 16. The reaction to a jam by the logic of the unit 16 is to invert the priority schedules for each of the couplings C. Consider an example.

Suppose a data jam occurs in the coupling C∅ because data words DA from the source line S∅ are not being transferred to those destination lines D which accord the source line S∅ low priority. Specifically for example, the coupling C1 accords the source line S∅ the lowest priority for the destination line D1. Low priority for the source line S∅ is also accorded to the destination lines S2, S3 and so on.

When the jam fills the FIFO buffer FI∅, a jam signal J∅ is provided through the lines 18 prompting the gate control priority unit 16 to invert all the usual priority schedules. As a result, the inverted priority schedule for the destination line D1 becomes: S∅, S9, S8, S7, S6, S5, S4, S3, S2 and S1 (the reverse order of the usual priority schedule). Consequently, data words DA from the source line S∅ are accorded the highest priority for the destination line D1. Normally as a result, the jam in FIFO buffer FI∅ is promptly cleared.

Another example, will illustrate a similar case. Suppose the coupling C9 is jammed for the want of transferring data words DA from the source line S9 to the destination line D∅. The usual priority schedule for the destination line D∅ is: S∅, S1, S2, S3, S4, S5, S6, S7, S8 and finally S9. Under the extraordinary conditions of a jam in the coupling C9, the priority schedule for the destination line D∅ becomes: S9, S8, S7, S6, S5, S4, S3, S2, S1 and S∅. Thus, the source line S9 is accorded the highest priority enabling prompt clearance of data through the destination line D∅. Although extreme priority levels have been treated in the above examples, it will be apparent that intermediate levels are similarly adjusted in the event of a jam.

As indicated above, another extraordinary condition arises when a sequence of data words DA arrive at a data coupling C as a data chain which is not to be broken or interrupted. It will be appreciated that for various reasons of computer operation a number of data words may be interrelated or exist in a chain sequence with

4

the consequence that they are to remain in contiguous relationship. Under such circumstances, a priority flag bit is provided in a data word DA with a flagged data word DA to indicate the data word is not to be separated from the next word. With a flagged data word DA stored in a FIFO buffer FI, a priority signal P is provided through the lines 18 to the gate control priority unit 16. As a consequence, before transfer of the flagged data word DA, a binary is set within the unit 16 imposing a control condition that the path for the word will remain available for the following word. Of course, several following words also may contain priority flag bits. If so, another cycle of transfer is accommodated. Thus, data words DA in the chain sequence are transferred contiguously, that is uninterrupted, from a specific source line S to a specific destination line D.

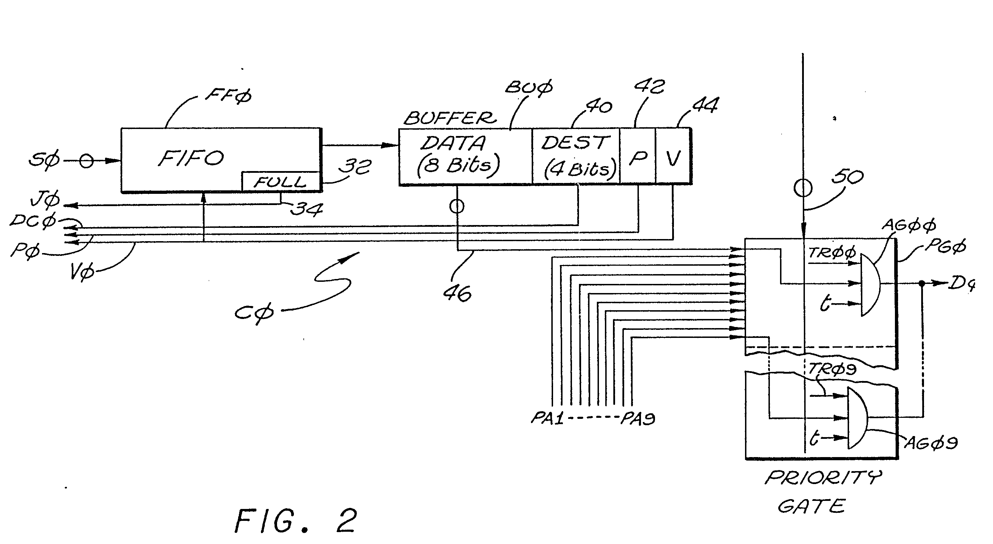

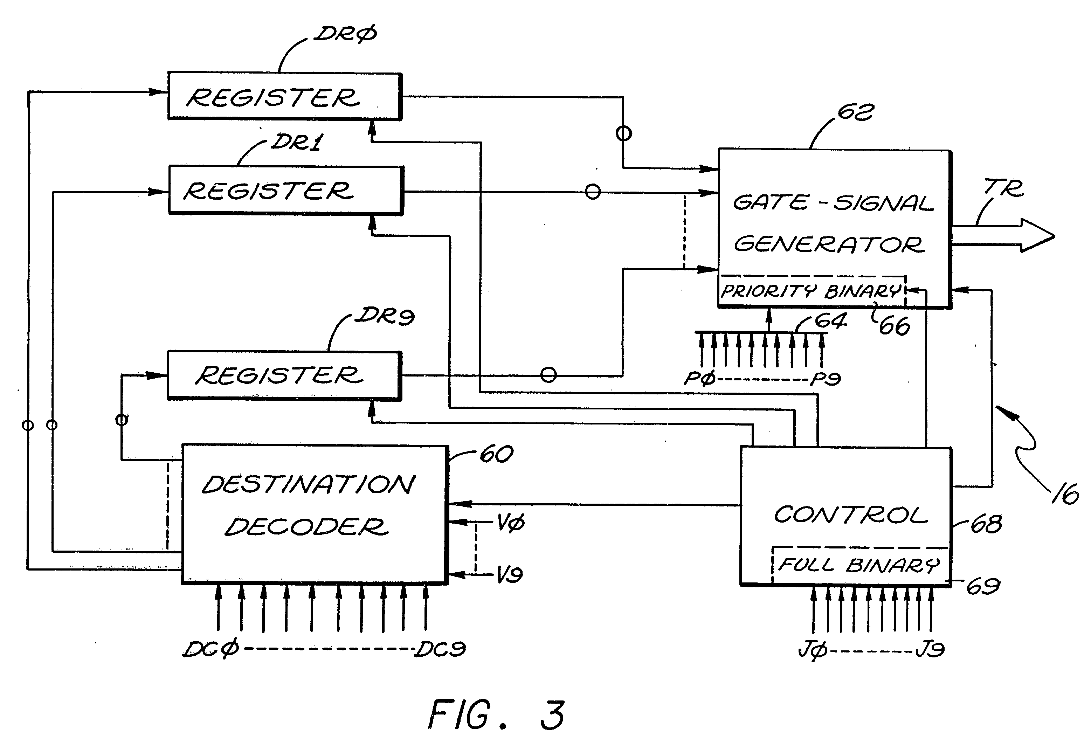

From the above explanations, it may be seen that the crossbar data-transfer system as disclosed accomplishes a balanced equity between a plurality of sources and a plurality of destinations. Furthermore, the system is susceptible of economical implementation for effective pipeline operation. In that regard, in accordance with current technology, the crossbar logic structure of FIGURE 1 may well be implemented on a single chip to embody the present invention in cooperative relationship with various data sources and data destinations. Of course, the individual components of the structure of FIGURE 1 may vary considerably depending on design and logic considerations. However, FIGURE 2 illustrates a detailed exemplary structure for the individual couplings C and FIGURE 3 illustrates a detailed exemplary structure for the gate control priority unit 16.

Referring initially to FIGURE 2, the coupling C0 is illustrated in detail. The source line S0 passes data to a FIFO FF0. In accordance with one implementation, the source line S0 accommodates the parallel transfer of fourteen bit binary data words DA to reside temporarily in the FIFO FF0. Various forms of FIFOs for parallel operation are well known in the prior art. Such units are operable as buffer registers in which data words flow in parallel from an input terminal to an output terminal. Exemplary forms of such FIFO units are disclosed in United States Patents 3,953,838 (Gilberg et al.) and 4,423,482 (Hargrove et al.).

The FIFO FF0 incorporates a slight modification from conventional prior-art units as indicated by the addition of structure represented as a "full" box 32. When the FIFO FF0 is full (loaded to capacity), the box 32 (which may comprise a binary, or simply a conductor) provides an output signal J0 in a conductor 34. The conductor 34 constitutes one of the signal passages in the lines 18 (FIGURE 1) connected to the gate control priority unit 16. As disclosed in greater detail below, the full signals FU prompt the unit 16 to invert the priority schedules.

The output from the FIFO FF0 (FIGURE 2) is to a buffer BU0 for registering the individual data word DA poised for transfer to a destination D. The buffer BU0 illustrates the format of the individual data words DA. Specifically, a field of eight bits comprise data as registered in a section 38. Four bits comprise an address field to indicate a specific designation line D and are registered in a section 40. The single priority bit P is registered in a section 42, and a single validity bit V is registered in a section 44.

When the priority bit P is a "one", the word is not to be separated from the following word. Alternatively, if the priority bit is "zero", the word is ordinary and the following word may be treated in accordance with the usual transfer schedule. The treatment and accommodation of such transfers was described above with respect to FIGURE 1.

The validity binary bit V simply indicates the presence of an actual word. That is, to distinguish residues or meaningless signals as may result from cleared data, each currently actual data word is distinguished by a validity bit V designating a "one". The validity bit is tested and words bearing a "zero" validity bit are disregarded.

Transfers from the buffer BU0 include the entire data word DA of fourteen bits as illustrated. In accordance with the operation of well known structures, the buffer BU0 may be cleared with the transfer of data or may be cleared by reading in a fresh data word.

From the buffer BU0, a data word DA is passed through a cable 46 to the priority gate PG0 (also illustrated in FIGURE 1). Note that the priority gate PG0 is connected by the cable 46 to receive the data words DA from each of the buffers BU in all of the individual couplings C. Also, from the buffer BU0, the data word DA0 is applied to all of the priority gates PG.

The lines in the cable 46, carrying the data words DA are applied through a common connection gate (not shown) to a series of ten individual "AND" gates AG. In FIGURE 2, only the "AND" gates AG00 and AG09 are illustrated; however, interim gates AG01-AG08 are provided to accommodate data words DA from the couplings C1-C8 respectively.

Essentially, the priority gate PG0 responds to any of ten distinct command signals in a cable 50 to pass a select one of the posed data words DA in the buffers BU. The selection of the word to be passed is in accordance with the current operating conditions as applied by the logic of the gate control priority unit 16 (FIGURE 1). Accordingly, the control signals for the priority gates PG are developed in the gate control priority unit 16. At this point in the description, it is simply important to appreciate that the priority gate PG comprises ten gang "AND" gates AG0 through AG09 for passing data from a select one of the couplings C to the destination D0.

Each of the gang gates AG0 in the system comprises a parallel gate as well known in the art for accommodating a data word DA as represented in parallel digital signals. Each of the gates AG in the priority gate PG0 receives a data word DA from a different buffer BU. The gates AG0 are then selectively qualified to pass one data word DA (during a timing interval) by signals in the cable 50 connected to the gate control priority unit 16 (FIGURE 1). Note that the gates AG0 are also indicated to be qualified by a timing signal t, as well known in pipeline data transfer systems.

The specific configuration of the gate PG0 is replicated in each of the couplings C to accommodate the passage of data words DA from any source line S to any destination line D.

Considering the operation of the coupling C0 as illustrated in FIGURE 2, data words DA arrive for temporary storage in the FIFO FF0. With the transfer of a word from the buffer BU0, a fresh word from the FIFO FF0 is set in the buffer BU0 posed for transfer to a destination line D. Of course, transfers are accorded in accordance with priority schedules as explained in detail above.

Assuming a situation where the data word DA indicates the destination line D0 (by the destination bits), normally it will immediately be transferred through the gate PG0 because of the priority schedule of the destination line D0. Accordingly, the cable 50 provides a signal to qualify the gate AG00 so that during the transfer time, manifest by the signal t, the data word DA is passed to the destination line D0.

Subsequent to each transfer, a fresh data word DA is moved from the FIFO FF0 into the buffer BU0. Of course, the fresh word may specify any one of the destination lines D and, accordingly, the time of transfer for the word will depend on priority schedules. Accordingly, at a specific time, the fresh word will be accorded priority and another transfer will occur.

As explained above, the FIFO FF0 may become full (jammed) with the result that a binary signal J0 in the line 34 goes high. The signal J0 is supplied to the gate control priority unit 16 (FIGURE 1) as described below to invert the priority schedules for all of the couplings C. As explained in detail below, such an inversion will normally clear the jam.

As another extraordinary situation, the buffer BU0 may receive a word with a flagged priority bit P ("one"). The signal P is supplied from the buffer BU0 to the gate control priority unit 16 (FIGURE 1). Such an occurrence seeks a commitment in the logic of the unit 16 to maintain an open passage to the addressed designation line D for the following word from the FIFO FF0.

As explained above, if the validity bit is not set (indicating a "zero"), the word is simply ignored and in that regard, the next word from the FIFO will move to the buffer 36. Consider now the operation of the gate control priority unit 16 (FIGURE 1) as shown in greater detail in FIGURE 3. As explained above, each of the data words DA contain a four-bit destination code DC (section 40 of buffer BU0, FIGURE 2) indicating the addressed destination line D. The destination code signals DC are supplied from each of the couplings C to a destination decoder 60 (FIGURE 3, lower left). Upon receipt of a destination address signal DC (indicating a specific destination line), the destination decoder 60 identifies the destination line D and registers an indication of the desiring source line (S1 through S9) in one of ten registers DR0 through DR9. Essentially, the register DR0 registers signals to indicate any or all of the source lines S from which data words DA are posed awaiting transfer to the destination line D0. For example, if the destination signal DC0 indicates the word in the buffer BU0 (coupling C0) is to be transferred to the destination line D0, a representative signal for the source line S0 is registered in the register DR0. Alternatively, if the objective destination line is line D9, the representative signal for the source line S0 is registered in the register DR9.

The registers DR are coupled to a gate signal generator 62 for providing the selectively generated transfer signals TR00 through TR99 to the individual priority gates PG in each of the couplings C (FIGURES 1 and 2). In that regard, note that each of the couplings C have ten gates AG00 through AG09 to accommodate transfers to the ten destination lines D. As there are ten couplings C, there are one hundred gates AG, specifically gates: AG00-AG09; AG10-AG19; AG20-AG29; ... AG90-AG99. Accordingly, the generator 62, in cooperation with a control 68 provides high values for select of the signals TR based on a logic implementation of the ordinary and extraordinary priority schedules as explained above to selectively qualify the gates AG. Normally, in implementations of a system embodying the present invention, the detailed structure of FIGURE 3 will be integral within a central processor. However, to illustrate the distinct operations and manipulations, separate block components are illustrated. Recapitulating, based on the desired destinations, the decoder 60 places an indication of the source line S in a select one of the registers DR. Specifically, the system implements the following logic:

| Signal | Code | Destination | Register |
|--------|------|-------------|----------|
| DC0 | 0001 | D0 | DR0 |
| DC1 | 0010 | D1 | DR1 |
| DC2 | 0011 | D2 | DR2 |
| DC3 | 0100 | D3 | DR3 |
| DC4 | 0101 | D4 | DR4 |
| DC5 | 0110 | D5 | DR5 |
| DC6 | 0111 | D6 | DR6 |
| DC7 | 1000 | D7 | DR7 |
| DC8 | 1001 | D8 | DR8 |
| DC9 | 1010 | D9 | DR9 |

Structurally, the decoder 60 may simply comprise a look-up table for keying representations of the sources S (indicated by the receiving lines 18) into a register DR in accordance with the indicated designation.

6

The gate-signal generator 62 provides up to ten gate signals TR to the gates AG in accordance with the priority schedule in operation as explained above. The logic simply identifies the highest priority source signal S contained in each of the registers DR. The highest priority source signal S then results in the designation of the coupling C that will supply its data word DA through the gate AG (FIGURE 2) to the destination line D associated with the buffer BU involved. The gate-signal generator 62 (FIGURE 3), sequenced and operated by the control 68, simply functions to provide the appropriate gate-signal TR according to that logic.

As detailed above, the logic is modified if a priority bit P exists to set the binary 66. In that event, the last gate-signal TR is simply repeated for the next transfer.

The control 68 could comprise a minicomputer logic, however, as indicated above in a total system, the function of the control 68 would be performed by the central processor. In addition to providing control and sequencing the signals t, the control 68 inverts the priority logic when a binary 69 is set by one of the jam signals J as described in detail above.

A transfer from the source line S0 to the destination line D0 will now be explained with reference to the detail of FIGURES 2 and 3. A data word DA is supplied from the source line S0 and in time moves to emerge from the FIFO FF0 (FIGURE 2) into the buffer BU0. From that location, a destination signal DC0 is indicated (four bits) from the section 40 to the destination decoder 60 (FIGURE 3). The signals supplied to the destination decoder 60 include representations of the source line S0 which are stored in the register DR0 indicating that the data word DA is awaiting transfer to the destination line D0. Note that several words may be indicated in the register DR0 (FIGURE 3) to indicate addressing to the destination D0.

After the above operations, the registers DR contain identification for each of the couplings C which contain data words DA posed for transfer to each of the destination lines D. As the current example involves a transfer of a word DA from the source line S0 to the destination line D0, it will be afforded highest priority as indicated by the register DR0. Accordingly, the gate-signal generator 62 (FIGURE 3) develops qualifying signals selective for the individual gates PG including a signal TR00 to qualify the "AND" gate AG00 resulting in the assumed transfer from the source line S0 to the destination line D0.

As explained above, if a number of sources are contained in the register DR0, the one with priority is accommodated by the gate signal generator 62 to appropriately qualify one of the gates AG (FIGURE 2).

In the event that one of the FIFOs is full, the "full" binary 69 (FIGURE 3) is set with the consequence that the gate signal generator 62 and the registers DR invert the priority schedule as explained above. As another extraordinary situation, if one of the data words contains a priority bit P, the priority binary 66 is set (unless inhibited) with the consequence that a commitment is made to transfer a data word DA along with at least one following word from the same source line.

In view of the above description of one embodiment, it will be apparent that the system of the present invention is capable of economical implementation in a variety of logic systems utilizing various components and structures to accomplish an effective, economical and equitable data transfer interface. Consequently, the scope hereof is deemed to be appropriately determined by the claims as set forth below.

## Claims

1. A data transfer system for intercoupling a predetermined number of data sources with a predetermined number of destinations for the controlled passage of signal-represented data, comprising:
gating structures interconnecting each of said data sources to each of said destinations;
means for providing an indicated destination for data in each of said sources;
priority means for accommodating the passage of data from each of said sources to said indicated destinations through said gating structures substantially in accordance with individual set balancing priority schedules for each of said sources.

2. A system according to claim 1 wherein said sources are specified as S0, S1, S2, S3, ... and said destinations are specified as D0, D1, D2, D3, ... and wherein said set priority schedules for said destinations are: D0 priority order is S0, S1, S2, S3, ...; D1 priority order is S1, S2, S3, S4, ...; D2 priority order is S2, S3, S4, S5, ...; ... and D9 priority order is S9, S0, S1, S2, ....

3. A system according to claim 1 wherein said priority means includes a priority inversion means for inverting said individual distinct balancing priority schedules to facilitate flow of data from said sources to said destinations.

4. A system according to claim 3 further including means for manifesting an extraordinary condition in said system for activating said priority inversion.

5. A system according to claim 4 wherein said means for manifesting comprises means for manifesting a data jam in said system.

6. A system according to claim 1 wherein said gating structures include FIFO storage structures for accommodating delays in the transfer of said signal-represented data.

7. A system according to claim 1 wherein said signal-represented data is in the form of digital words and wherein said gating structure includes means for providing a signal-represented address designation for said words to identify a select destination.

8. A system according to claim 1 wherein said gating structures include time-controlled gates to transfer the passage of data to each of said destinations concurrently.

9. A system according to claim 1 wherein said certain of said data indicates priority of transfer for following data and wherein said priority means includes means to modify said priority schedules in accordance with said data indicating priority of transfer.

10. A system according to claim 1 wherein said sources are specified as S0, S1, S2, S3, ... and said destinations are specified as D0, D1, D2, D3, ... and wherein said set priority schedules for said destinations are: D0 priority order is S0, S1, S2, S3, ...; D1 priority order is S1, S2, S3, S4, ...; D2 priority order is S2, S3, S4, S5, ...; ... and D9 priority order is S9, S0, S1, S2, ...., wherein said priority means includes a priority inversion means for inverting said individual distinct balancing priority schedules to facilitate flow of data from said sources to said destinations, and wherein said gating structures include FIFO storage structures for accommodating delays in the transfer of said signal-represented data.

11. A process for transferring signal-represented data words from any of a set of sources to any of a set of destinations including the steps of:

providing address signals for said data words to indicate a destination;

registering said data words posed for transfer;

registering sources of data words posed for transfer; and

transferring data words posed for transfer from sources to destinations in accordance with the sources of said words as registered and set priority schedules for said sources with respect to each of said destinations, said priority schedules being balanced for equity of access among said sources to said destinations.

12. A process according to claim 11 further including a step of sequencing the transfer of data words whereby said data words are cyclically transferred.

13. A process according to claim 11 wherein said sources are specified as S0, S1, S2, S3, ... and said destinations are specified as D0, D1, D2, D3, ... and wherein said set priority schedules for said destinations are: D0 priority order is S0, S1, S2, S3, ...; D1 priority order is S1, S2, S3, S4, ...; D2 priority order is S2, S3, S4, S5, ...; ... and D9 priority order is S9, S0, S1, S2, ....

14. A process according to claim 11 wherein said step of transferring data further includes inverting said individual distinct balancing priority schedules to facilitate flow of data from said sources to said destinations.

15. A process according to claim 14 wherein said step of inverting includes sensing an extraordinary condition in said system for activating said priority inversion.

FIG. I

FIG. 2

EP 0 324 662 A2

FIG. 3

EP 0 324 662 A2